# EUROPEAN PATENT SPECIFICATION

(11) **EP 4 542 327 B1**
(45) Date of publication and mention of the grant of the patent: **29.04.2026**
(21) Application number: 23842097.0
(22) Date of filing: 30.06.2023
(51) Int. Cl.: G05D 1/247, G05D 1/248, G05D 1/661

(54) **MOWING ROBOT RECHARGING METHOD, MOWING ROBOT AND STORAGE MEDIUM**
VERFAHREN ZUM WIEDERAUFLADEN EINES MÄHROBOTERS, MÄHROBOTER UND SPEICHERMEDIUM
PROCÉDÉ DE RECHARGE DE ROBOT DE TONTE, ROBOT DE TONTE ET SUPPORT DE STOCKAGE

(30) Priority: 22.07.2022 CN 202210877340
(43) Date of publication of application: 23.04.2025
(73) Proprietor: Shenzhen Mammotion Innovation Co., Limited, Shenzhen, Guangdong 518000 (CN)
(72) Inventor: ZHANG, Weifu, Shenzhen, Guangdong 518000 (CN); WANG, Ning, Shenzhen, Guangdong 518000 (CN); HUANG, Zhenhao, Shenzhen, Guangdong 518000 (CN)
(74) Representative: Huang, Liwei
(86) International application number: PCT/CN2023/105155
(87) International publication number: WO 2024/017032

(56) References cited:
- WO-A1-2020/027496
- CN-A- 108 829 112
- CN-A- 109 669 446
- CN-A- 111 103 879
- CN-A- 111 772 544
- CN-A- 115 145 283
- CN-B- 108 142 069
- KR-A- 20130 092 452
- US-A1- 2012 029 753
- US-A1- 2022 197 295

## Description

### Technical Field

The present disclosure relates to the field of computer technologies, and in particular, to a mowing robot recharging method, a mowing robot, and a storage medium.

### Background Art

Mowing robots are widely used for maintenance of home courtyard lawns and trimming of large grassy lands. The mowing robots incorporate technologies such as motion control, multi-sensor fusion, and path planning. To ensure continuous operation of a mowing robot, the mowing robot needs to be switched to a recharging mode and automatically returns to a charging pile for charging, after it completes a mowing task or when it is running out of power.

However, in the process of research and practice of the prior art, the inventors of the present disclosure have found that for most of the current mowing robots, when recharging starts, a mowing robot may perform stationary rotation at a certain position to adjust its position and direction due to the need to align its infrared receiver with an infrared emitter on the charging pile. Consequently, the mowing robot frequently rotates at the same position to align with the charging pile, resulting in severe turf wear at this position. Therefore, there is an urgent need for a recharging method that can overcome the above problem.

US20220197295A1 has disclosed a method of controlling a robotic mower to move according to a selected path map, the method includes: moving the robotic mower along a selected path; obtaining current position information of the robotic mower; determining a deviation between the current position and a predetermined position of the selected path; determining that a missing mowing area occurs when the deviation is greater than a preset threshold value; and moving the robotic mower to cut the missing mowing area.

KR1020130092452A provided the manless driving control device of a working vehicle for not injuring the aesthetics of the work area with the trajectory when returning to the battery charger as to the manless driving control device of a working vehicle for being mounted in the car body and driving the working machine from the battery with the electrified electric motor and operating for the battery charger. The magnetic field intensity of the area wire arranged in the edge of the work area is detected in the manless driving control device of a working vehicle of the present invention which drives the working machine (the blade) with the electric motor while operating the wheel to the turbine and traveling the work area and operates. The separation distance from the area wire is detected based on the detected magnetic field intensity (S26). And when it returns to the battery charger installed at the battery charger on the work area it differently selects about the separation distance from the area wire whenever it returns to any one of feed back propel trace (the establishment trajectory 1 through 4) of the predetermined plurality (the S40 from the S36).

WO2020027496A1 has disclosed a moving robot includes a traveling unit, a power supply unit, a communication unit, and a memory to store therein coordinates information regarding a point to which the main body has moved by a reference distance in a state of being in contact with the charging station, and a control unit to output a control command to return to the charging station based on a state of the power supply unit while the main body travels in the one area, to determine a position of the charging station from a current position of the main body based on a first signal transmitted from the charging station and a second signal transmitted by the communication unit, in response to the output of the control command, and to controls the traveling unit so that the main body moves to a position corresponding to the stored coordinates information.

### Summary

Aspects of the present invention provide a mowing robot recharging method, a mowing robot, and a storage medium, to reduce the situation that the mowing robot frequently rotates at the same position before being recharged on a charging pile, resulting in severe turf wear at the position, and prevent a lawn from being damaged by the mowing robot while ensuring the efficiency of recharging on the charging pile.

According to a first aspect, a mowing robot recharging method according to independent claim 1 is provided. The method comprises:
obtaining a position of a mowing robot in response to a recharging request for the mowing robot;
obtaining a preset recharging path and a position of a charging pile;
controlling the mowing robot to navigate to the recharging path based on the recharging path and the position of the mowing robot; and
controlling the mowing robot to perform a recharging task based on the recharging path, the position of the charging pile, and the current position of the mowing robot, including adjusting a current recharging point of the mowing robot to avoid a previous recharging point, wherein a recharging point is a point where the mowing robot rotates to adjust an orientation of the mowing robot, and after the mowing robot rotates at the current recharging point to align with the charging pile, controlling the mowing robot to perform the recharging task on the charging pile. The recharging path is preset based on a direction to the charging pile and positions of infrared emitters which are provided on the charging pile.

Optionally, in some embodiments, the controlling the mowing robot to perform a recharging task based on the recharging path, the position of the charging pile, and the current position of the mowing robot comprises:
controlling the mowing robot to navigate to a first adjustment point on the recharging path based on the current position of the mowing robot; and
randomly selecting any point other than the first adjustment point on the recharging path as a first recharging point , and controlling the mowing robot to navigate to the first recharging point to perform the recharging task.

Optionally, in some embodiments, the controlling the mowing robot to perform a recharging task based on the recharging path, the position of the charging pile, and the current position of the mowing robot comprises:
controlling the mowing robot to navigate to a first adjustment point on the recharging path based on the current position of the mowing robot;
obtaining a distance between the first adjustment point and the position of the charging pile; and
selecting a second recharging point on the recharging path according to a preset first recharging strategy based on the distance between the first adjustment point and the position of the charging pile, and controlling the mowing robot to navigate to the second recharging point to perform the recharging task.

Optionally, in some embodiments, the selecting the second recharging point on the recharging path according to the preset first recharging strategy based on the distance between the first adjustment point and the position of the charging pile, and controlling the mowing robot to navigate to the second recharging point to perform the recharging task includes:
when the distance between the first adjustment point and the position of the charging pile is less than or equal to a preset first threshold, selecting any point between a start point of the recharging path and the first adjustment point as the second recharging point; or
when the distance between the first adjustment point and the position of the charging pile is greater than a preset first threshold, selecting any point between an end point of the recharging path and the first adjustment point as the second recharging point; and
controlling the mowing robot to navigate to the second recharging point to perform the recharging task.

Optionally, in some embodiments, after the controlling the mowing robot to perform a recharging task, the method further comprises:
obtaining a historical recharging point of the mowing robot in response to the recharging request for the mowing robot; and
determining a newest recharging point of the mowing robot for the current recharging task based on the historical recharging point, and controlling the mowing robot to navigate to the newest recharging point to perform the recharging task.

Optionally, in some embodiments, the determining a newest recharging point of the mowing robot for the current recharging task based on the historical recharging point, and controlling the mowing robot to navigate to the newest recharging point to perform the recharging task comprises:
randomly selecting any point other than the historical recharging point on the recharging path as the newest recharging point, and controlling the mowing robot to navigate to the newest recharging point to perform the recharging task.

Optionally, in some embodiments, the determining a newest recharging point of the mowing robot for the current recharging task based on the historical recharging point, and controlling the mowing robot to navigate to the newest recharging point to perform the recharging task comprises:
selecting the newest recharging point on the recharging path according to the preset first recharging strategy based on a distance between the historical recharging point and the charging pile, and controlling the mowing robot to navigate to the newest recharging point to perform the recharging task, where the newest recharging point does not coincide with the historical recharging point.

Optionally, in some embodiments, when there are a plurality of historical recharging points, the determining a newest recharging point of the mowing robot for the current recharging task based on the historical recharging points, and controlling the mowing robot to navigate to the newest recharging point to perform the recharging task comprises:
obtaining recording times of the plurality of historical recharging points, and selecting a historical recharging point with the newest recording time as a second adjustment point; and
selecting the newest recharging point on the recharging path according to a preset second recharging strategy based on a distance between the second adjustment point and the charging pile, and controlling the mowing robot to navigate to the newest recharging point to perform the recharging task, where the newest recharging point does not coincide with any one of the plurality of historical recharging points.

According to a second aspect, a mowing robot according to independent claim 9 is provided.

According to a third aspect, a storage medium according to independent claim 10 is provided.

**In** the embodiments of the present disclosure, the position of the mowing robot is obtained in response to the recharging request for the mowing robot; next, the preset recharging path and the position of the charging pile are obtained; then, the mowing robot is controlled to navigate to the recharging path based on the recharging path and the position of the mowing robot; and finally, the mowing robot is controlled to perform the recharging task based on the preset recharging path, the position of the charging pile, and the current position of the mowing robot. In the mowing robot recharging solution according to the present disclosure, the preset recharging path and the position of the charging pile are obtained, and in response to the recharging request, the mowing robot is accurately controlled to navigate to the recharging path to prepare for being recharged on the charging pile; and then, each time the mowing robot is to be recharged on the charging pile, the current recharging point of the mowing robot is quickly adjusted based on the recharging path, the position of the charging pile, and the current position of the mowing robot, so that the mowing robot can avoid previous recharging points as much as possible each time the mowing robot is recharged on the charging pile, and the mowing robot is controlled to quickly perform the recharging task on the charging pile after the mowing robot rotates at the current recharging point to align with the charging pile. This can reduce the situation that the mowing robot frequently rotates at the same position before being recharged on the charging pile, resulting in severe turf wear at the position. It can be learned therefrom that the embodiments of the present disclosure can prevent the lawn from being damaged by the mowing robot while ensuring the efficiency of recharging on the charging pile.

### Brief Description of the Drawings

In order to more clearly describe the technical solutions in the embodiments of the present disclosure, the accompanying drawings necessary for describing the embodiments will be briefly described below. Apparently, the accompanying drawings in the description below merely show some of the embodiments of the present disclosure, and those skilled in the art would have obtained other drawings from these drawings without involving any inventive effort.
FIG. 1 is a schematic diagram of a scenario of a mowing robot recharging method according to an embodiment of the present disclosure;
FIG. 2 is a schematic diagram of another scenario of a mowing robot recharging method according to an embodiment of the present disclosure;
FIG. 3 is a schematic flowchart of a first implementation of a mowing robot recharging method according to an embodiment of the present disclosure;
FIG. 4 is a schematic flowchart of a second implementation of a mowing robot recharging method according to an embodiment of the present disclosure;
FIG. 5 is a schematic flowchart of a third implementation of a mowing robot recharging method according to an embodiment of the present disclosure;
FIG. 6 is a schematic flowchart of a fourth implementation of a mowing robot recharging method according to an embodiment of the present disclosure;
FIG. 7 is a schematic flowchart of a fifth implementation of a mowing robot recharging method according to an embodiment of the present disclosure;
FIG. 8 is a schematic diagram of a structure of a mowing robot recharging apparatus according to an embodiment of the present disclosure; and
FIG. 9 is a schematic diagram of a structure of a mowing robot according to an embodiment of the present disclosure.

### Detailed Description of Embodiments

The technical solutions in the embodiments of the present disclosure will be described clearly and completely below with reference to the accompanying drawings in the embodiments of the present disclosure. Apparently, the described embodiments are only some rather than all of the embodiments of the present disclosure. All the other embodiments obtained by those skilled in the art based on the embodiments of the present disclosure without creative efforts shall fall within the scope of protection of the present claims.

It should be noted that when an element is referred to as being "fixed to" or "disposed" on another element, it may be directly on or indirectly on another element. When an element is referred to as being "connected" to another element, it may be directly or indirectly connected to another element. In addition, the connection may have the function of fixing or circuit connection.

It should be understood that the orientation or positional relationships indicated by the terms "length", "width", "upper", "lower", "front", "rear", "left", "right", "vertical", "horizontal", "top", "bottom", "inner", "outer", etc. are based on the orientation or positional relationship shown in the accompanying drawings and are only for facilitating the description of the embodiments of the present disclosure and simplifying the description, rather than indicating or implying that an apparatus or an element referred to must have a particular orientation or be constructed and operated in a particular orientation, and therefore will not be interpreted as limiting the present invention.

In addition, the terms "first" and "second" are merely used for the purpose of illustration, and cannot be construed as indicating or implying relative importance or implicitly indicating the number of technical features indicated. Thus, the features defined with "first" and "second" may explicitly or implicitly include one or more features. In the description of the embodiments of the present disclosure, "a plurality of" means two or more, unless specifically defined otherwise.

The embodiments of the present disclosure provide a mowing robot recharging method, a mowing robot, and a storage medium.

The mowing robot recharging apparatus, herein also mowing robot, may be specifically integrated in a microcontroller unit (MCU) of the mowing robot, or may be integrated in an intelligent terminal or a server. The MCU, also referred as a single-chip microcomputer or microcontroller, is designed to reduce the frequency and specifications of a central process unit (CPU) and integrates peripheral interfaces such as a memory, a timer, a USB, an analog to digital converter/digital to analog converter, a UART, a PLC and a DMA to form a chiplevel computer so as to provide different combined controls for different applications. The mowing robot may walk automatically, prevent collisions, return for charging automatically within a range, is provided with safety detection and battery level detection, and has a certain climbing ability, is especially suitable for lawn trimming and maintenance in places such as home courtyards, public green space, etc., and has the characteristics of automatic grass cutting, cleanup of grass chips, automatic rain protection, automatic charging, automatic obstacle avoidance, small form factor, electronic virtual fencing, network control, etc.

The terminal may be a smartphone, a tablet, a laptop, a desktop computer, a smart speaker, a smart watch, etc., but is not limited thereto. The terminal and the server may be connected directly or indirectly by means of wired or wireless communication, the server may be a separate physical server, a cluster or distributed system of multiple physical servers, or a cloud server which provides cloud services, cloud databases, cloud computing, cloud functions, cloud storage, network services, cloud communications, middleware services, domain name services, security services, CDNs, and basic cloud computing services such as big data and artificial intelligence platforms, and is not limited in the present disclosure.

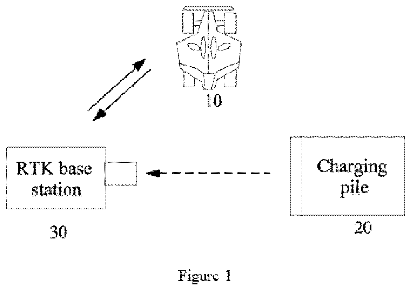

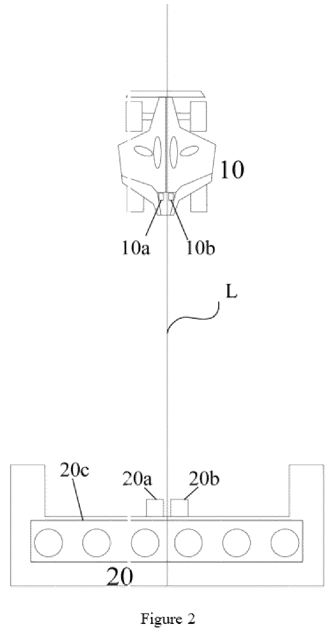

For example, referring to FIG. 1, an embodiment of the present disclosure provides a mowing robot recharging system, which includes a charging pile 20, and a mowing robot 10 and an RTK reference station 30 that have a communication connection established therebetween, where the RTK reference station 30 may be set up on the charging pile or in another open place. As shown in FIG. 2, in this embodiment, charging metal sheets are provided on the mowing robot 10. A plurality of infrared emitters 20c having different emission frequencies, and charging connectors (20a and 20b) that mate with the charging metal sheets (10a and 10b) are provided on the charging pile 20. The plurality of infrared emitters 20c are evenly distributed on the charging pile 20 with reference to the positions of the charging connectors provided on the charging pile 20. In the process of connecting the mowing robot 10 to the charging pile, positioning can be performed based on infrared rays emitted by different infrared emitters, and on this basis, the position and orientation of the mowing robot can be adjusted, so that the charging metal sheets (10a and 10b) provided on the mowing robot 10 can be aligned with the charging connectors (20a and 20b) provided on the charging pile 20. During practical disclosure, the charging connectors may be metal contacts, and the metal contacts are in contact with the charging metal sheets for conduction to implement contact-based charging.

Specifically, first, a center line of a preset length (for example, 3 m) is provided within a preset range in front of the charging pile 20 according to the center position of the charging connectors on the charging pile 20. The center position of the charging connectors is used as an end point of the center line, the center line is used as the recharging path L of the mowing robot 10, and the direction of the recharging path is from the start point to the center of the charging connectors on the charging pile 20. In response to a recharging request for the mowing robot 10, the position information of the mowing robot 10 is obtained through the RTK reference station 30; then, the mowing robot 10 is navigated, through the RTK reference station 30, to return to the recharging path L; and finally, the current recharging point of the mowing robot 10 is determined based on the preset recharging path L, the position of the charging pile, and the current position of the mowing robot 10, so that the mowing robot 10 is accurately controlled to navigate to the current recharging point and then rotates at the current recharging point (that is, to adjust the orientation of the mowing robot), making the orientation of the charging metal sheets (10a and 10b) align with the charging pile 20 to quickly perform the recharging task on the charging pile. Finally, the mowing robot 10 is accurately controlled to quickly return to the charging pile 20 and orient towards the charging pile 20 in a right direction to ensure that the orientation of the charging metal sheets (10a and 10b) of the mowing robot 10 and the orientation of the charging pile 20 are on the same straight line, and the charging task on the charging pile is finally completed.

For example, specifically, the position of the mowing robot 10 is obtained in response to the recharging request for the mowing robot; then, the preset recharging path L and the position of the charging pile are obtained, where as described earlier, the recharging path is preset based on the direction of the charging pile 20 and the position of the infrared emitter, the mowing robot 10 can obtain the preset recharging path L locally, and then the mowing robot 10 is navigated to the recharging path L through the RTK base station 30; and finally, the current recharging point of the mowing robot 10 is determined based on the preset recharging path, the position of the charging pile, and the current position of the mowing robot 10, so that the mowing robot 10 is accurately controlled to navigate to the current recharging point and then rotates at the current recharging point to align with the charging pile 20 to quickly perform the recharging task on the charging pile. Finally, after the mowing robot 10 accurately reaches the position of the charging pile 20, and the charging metal sheets (10a and 10b) of the mowing robot 10 are aligned with the charging connectors (20a and 20b) on the charging pile 20, the mowing robot 10 is electrically connected to the charging pile 20 to perform the recharging operation on the charging pile.

In the mowing robot recharging solution according to the present disclosure, the preset recharging path and the position of the charging pile are obtained, and in response to the recharging request, the mowing robot is accurately controlled to navigate to the recharging path to prepare for being charged on the charging pile; and then, each time the mowing robot is to be recharged on the charging pile, the current recharging point of the mowing robot is quickly adjusted based on the preset recharging path, the position of the charging pile, and the current position of the mowing robot, so that the mowing robot can avoid previous recharging points as much as possible each time the mowing robot is recharged on the charging pile, and the mowing robot is controlled to quickly perform the recharging task on the charging pile after the mowing robot rotates at the current recharging point to align with the charging pile. This can reduce the situation that the mowing robot frequently rotates at the same position before being recharged on the charging pile, resulting in severe turf wear at the position. It can be learned therefrom that the embodiments of the present disclosure can prevent the lawn from being damaged by the mowing robot while ensuring the efficiency of recharging on the charging pile.

Detailed descriptions are provided below. It should be noted that the order in which the following embodiments are described is not intended to limit the order of precedence of the embodiments.

Provided is a mowing robot recharging method, the method including: obtaining a position of a mowing robot in response to a recharging request for the mowing robot; obtaining a preset recharging path and a position of a charging pile; controlling, based on the recharging path and the position of the mowing robot, the mowing robot to navigate to the recharging path; and controlling the mowing robot to perform a recharging task based on the preset recharging path, the position of the charging pile, and the current position of the mowing robot.

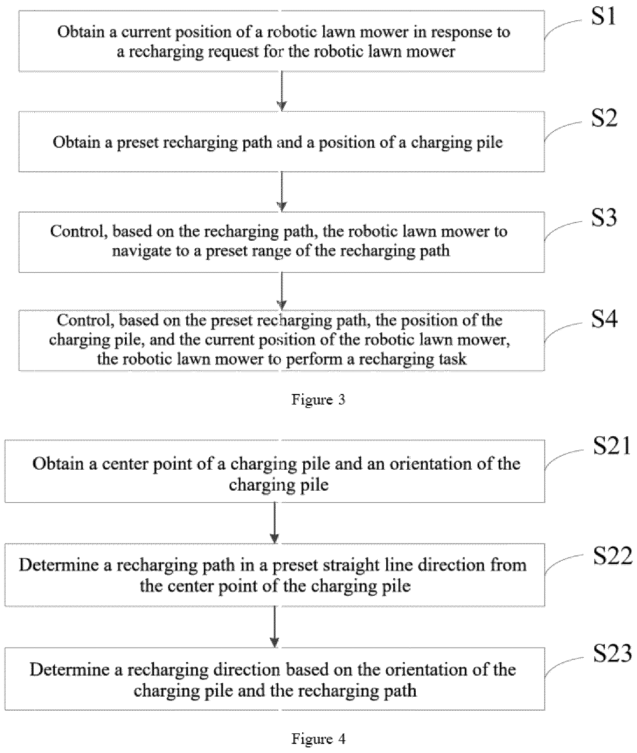

Referring to FIG. 3, FIG. 3 is a schematic flowchart of a mowing robot recharging method according to an embodiment of the present disclosure. The specific process of the mowing robot recharging method may be as follows.

S1: Obtaining a position of a mowing robot in response to a recharging request for the mowing robot.

Specifically, for step S1, the recharging request for the mowing robot is first responded to. The recharging request may be triggered by the mowing robot itself, or by a server, or by a user through hardware or software. For example, the mowing robot regularly detects the remaining power, and starts to automatically return for charging when the mowing robot detects that the power level has decreased to a critical value (for example, the power level of 15%). Alternatively, a timed recharging task is set for the mowing robot, and the recharging request is triggered after the completion of each mowing task or within a preset period of time. Alternatively, an application on a mobile phone may be used to prompt the user that the current mowing robot is running out of power, which requires the user to input a recharging task for the mowing robot through the application on the mobile phone, and the mobile phone generates the recharging request for the mowing robot based on information about the recharging task. additionally, the user can press a physical recharging button on the mowing robot to generate the recharging request for the mowing robot, and the mowing robot performs the recharging task. In response to the recharging request for the mowing robot, the position of the mowing robot is obtained in real time.

S2: Obtaining a preset recharging path and a position of a charging pile.

Specifically, for step S2, before the recharging task on the charging pile is performed, the center line of the charging pile also needs to be preset as the recharging path of the mowing robot based on the position and location of the charging pile, mainly based on the position of the infrared emitter on the charging pile and the orientation of the charging pile. The recharging path further includes a recharging direction; and in response to the recharging request for the mowing robot, the mowing robot can obtain the preset recharging path and the position of the charging pile locally.

Optionally, as shown in FIG. 4, in some embodiments, step S2 may specifically include:
S21: obtaining a center point of the charging pile and a orientation of the charging pile;
S22: determining the recharging path in a preset straight line direction from the center point of the charging pile; and
S23: determining the recharging direction based on the orientation of the charging pile and the recharging path.

Specifically, the center point of the charging pile and the orientation of the charging pile are first obtained, where the center point of the charging pile is the center of the infrared emitter on the charging pile. The recharging path is determined in the straight line direction from the orientation of the charging pile based on the center of the infrared emitter, where the direction of the recharging path is a straight line direction pointing to the charging connectors on the charging pile.

S3: Controlling the mowing robot to navigate to the recharging path based on the recharging path.

Specifically, for step S3, after the mowing robot obtains the preset recharging path and the position of the charging pile, the mowing robot is accurately controlled to navigate to the recharging path based on the recharging path and the position information of the mowing robot. For example, the server can control the mowing robot to travel based on the preset recharging path, the position of the charging pile, and the position of the mowing robot, so that the mowing robot navigates to the recharging path. The intelligent terminal can control the mowing robot to travel based on the recharging path and the position of the mowing robot, so that the mowing robot navigates to the recharging path.

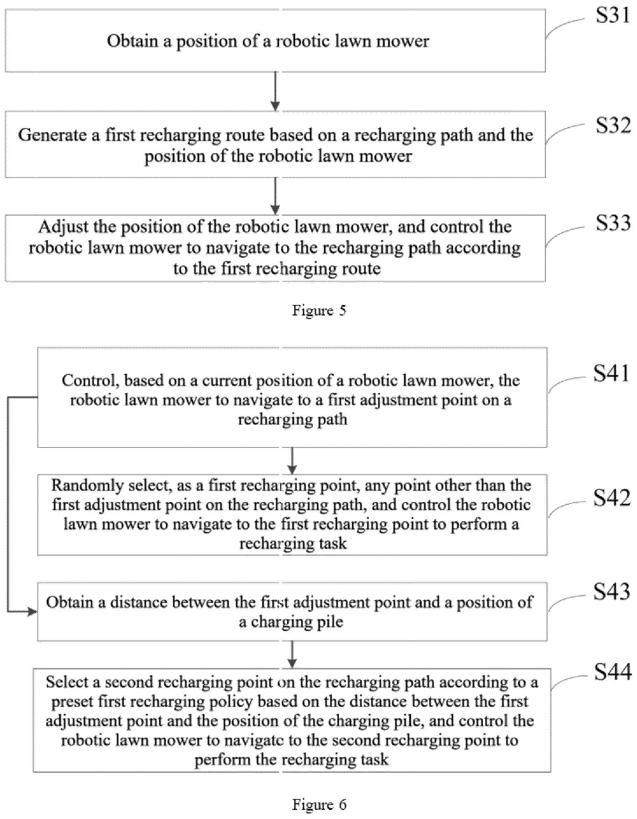

Optionally, as shown in FIG. 5, in some embodiments, step S3 may specifically include:
S31: obtaining the position of the mowing robot;
S32: generating a first recharging route based on the recharging path and the position of the mowing robot; and
S33: adjusting the position of the mowing robot, and controlling the mowing robot to navigate to the recharging path according to the first recharging route.

Specifically, in response to the recharging request, the position of the mowing robot is obtained in real time, and the first recharging route is planned and generated based on the preset recharging path and the position of the mowing robot, so that the position of the mowing robot is adjusted according to the first recharging route, and the mowing robot is controlled to navigate to the recharging path according to the first recharging route. For example, based on the position of the mowing robot, the shortest route between the position and the recharging path is taken as the first recharging route, so that the mowing robot is controlled to navigate to the recharging path according to the first recharging route.

In a specific embodiment, the server can control the mowing robot to travel based on the preset recharging path and the position of the charging pile, so that the mowing robot navigates to the recharging path according to the first recharging route. The intelligent terminal can control the mowing robot to travel based on the recharging path and the position of the mowing robot, so that the mowing robot navigates to the recharging path according to the first recharging route.

S4: Controlling the mowing robot to perform the recharging task based on the recharging path, the position of the charging pile, and the current position of the mowing robot,.

Specifically, for step S4, after the mowing robot arrives at a point on the recharging path, the current recharging point of the mowing robot is quickly adjusted based on the preset recharging path, the position of the charging pile, and the current position of the mowing robot, so that the mowing robot can avoid a previous recharging point as much as possible, when the mowing robot is recharged on the charging pile this time, and the mowing robot is controlled to quickly perform the recharging task on the charging pile after the mowing robot rotates at the current recharging point to align with the charging pile. This can reduce the situation that the mowing robot frequently rotates at the same position before being recharged on the charging pile, resulting in severe turf wear at the position.

Optionally, as shown in FIG. 6, in some embodiments, step S4 may specifically include:
S41: controlling the mowing robot to navigate to a first adjustment point on the recharging path based on the current position of the mowing robot; and
S42: randomly selecting any point other than the first adjustment point on the recharging path as a first recharging point, and controlling the mowing robot to navigate to the first recharging point to perform the recharging task.

Specifically, this embodiment further provides a method for randomly selecting a recharging point to perform the recharging task. The specific process is as follows. The mowing robot is first controlled, based on the current position of the mowing robot, to navigate to a preset first adjustment point, where the first adjustment point can be a vertical connection point between the recharging path and the current position of the mowing robot after the recharging request is responded to; after the mowing robot arrives at the first adjustment point on the recharging path, any point is randomly selected on the recharging path as the first recharging point, where the first recharging point cannot coincide with the first adjustment point; and finally, the mowing robot is controlled to navigate to the first recharging point to perform the recharging task on the charging pile.

Optionally, as shown in FIG. 6, in some embodiments, step S4 may specifically further include:
S41: controlling the mowing robot to navigate to a first adjustment point on the recharging path based on the current position of the mowing robot;
S43: obtaining a distance between the first adjustment point and the position of the charging pile; and
S44: selecting a second recharging point on the recharging path according to a preset first recharging strategy based on the distance between the first adjustment point and the position of the charging pile, and controlling the mowing robot to navigate to the second recharging point to perform the recharging task.

Specifically, this embodiment further provides another method for selecting a recharging point to perform the recharging task. The specific process is as follows. The mowing robot is first controlled, based on the current position of the mowing robot, to navigate to a preset first adjustment point, where the first adjustment point can be a vertical connection point between the recharging path and the current position of the mowing robot after the recharging request is responded to; then, a distance between the first adjustment point and the position of the charging pile is calculated; and a second recharging point is selected on the recharging path according to the preset first recharging strategy based on the distance between the first adjustment point and the position of the charging pile, so that the mowing robot is controlled to navigate to the second recharging point to perform the recharging task, where the second recharging point cannot coincide with the first adjustment point.

Optionally, in some embodiments, the selecting a second recharging point on the recharging path according to a preset first recharging strategy based on the distance between the first adjustment point and the position of the charging pile, and controlling the mowing robot to navigate to the second recharging point to perform the recharging task may specifically comprises:
when the distance between the first adjustment point and the position of the charging pile is less than or equal to a preset first threshold, selecting any point between a start point of the recharging path and the first adjustment point as the second recharging point; or
when the distance between the first adjustment point and the position of the charging pile is greater than a preset first threshold, selecting any point between an end point of the recharging path and the first adjustment point as the second recharging point; and
controlling the mowing robot to navigate to the second recharging point to perform the recharging task.

In a specific embodiment, when the distance between the first adjustment point and the position of the charging pile is less than or equal to the preset first threshold, which indicates that the mowing robot is relatively close to the charging pile at this time, any point is selected, as the second recharging point, between the start point of the preset recharging path and the first adjustment point, that is, any point is selected, as the second recharging point for the recharging task, between the first adjustment point and the start point of the recharging path and in the direction away from the position of the charging pile; or if the distance between the first adjustment point and the position of the charging pile is greater than the preset first threshold, which indicates that the mowing robot is relatively far away from the charging pile at this time, any point is selected, as the second recharging point, between the end point of the preset recharging path and the first adjustment point, that is, any point is selected, as the second recharging point for the recharging task, between the first recharging point and the charging pile and in the direction close to the position of the charging pile; and finally, the mowing robot is controlled to navigate to the second recharging point to perform the recharging task.

Optionally, in some embodiments, the selecting a second recharging point on the recharging path according to a preset first recharging strategy based on the distance between the first adjustment point and the position of the charging pile, and controlling the mowing robot to navigate to the second recharging point to perform the recharging task may specifically include:
When the distance between the first adjustment point and the position of the charging pile is less than a preset first threshold, selecting any point between a start point of the recharging path and the first adjustment point as the second recharging point; or
When the distance between the first adjustment point and the position of the charging pile is greater than or equal to a preset first threshold, selecting any point between an end point of the recharging path and the first adjustment point as the second recharging point; and
controlling the mowing robot to navigate to the second recharging point to perform the recharging task.

In a specific embodiment, when the distance between the first adjustment point and the position of the charging pile is less than the preset first threshold, any point is selected, as the second recharging point, between the start point of the preset recharging path and the first adjustment point, that is, any point is selected, as the second recharging point for the recharging task, between the first adjustment point and the start point of the recharging path; or if the distance between the first adjustment point and the position of the charging pile is greater than or equal to the preset first threshold, any point is selected, as the second recharging point, between the end point of the preset recharging path and the first adjustment point; and finally, the mowing robot is controlled to navigate to the second recharging point to perform the recharging task.

It should be noted that in this embodiment, after the mowing robot is controlled to navigate to the first recharging point or the second recharging point, the mowing robot is controlled to perform stationary rotation to search for an infrared signal. If no target infrared signal is detected by the mowing robot after stationary rotation, it is determined that the orientation of the charging metal sheet of the mowing robot at this time is not completely consistent with the recharging direction. In this case, the next recharging point needs to be determined according to the two methods described above, until the mowing robot detects the target infrared signal after performing stationary rotation at the current recharging point. This ensures that the recharging task can be performed, and can further avoid the situation that the mowing robot frequently rotates at the same position, causing damage to turf.

In addition, in the process of controlling the mowing robot to travel from the first adjustment point to the first recharging point, from the first adjustment point to the second recharging point, or from the current recharging point to the next recharging point, the traveling route of the mowing robot can be a straight line on the recharging path. The mowing robot may also be controlled to navigate to a target point by means of traveling in circles, in order to avoid abrasion of turf caused by frequent travel of the mowing robot back and forth on the recharging path.

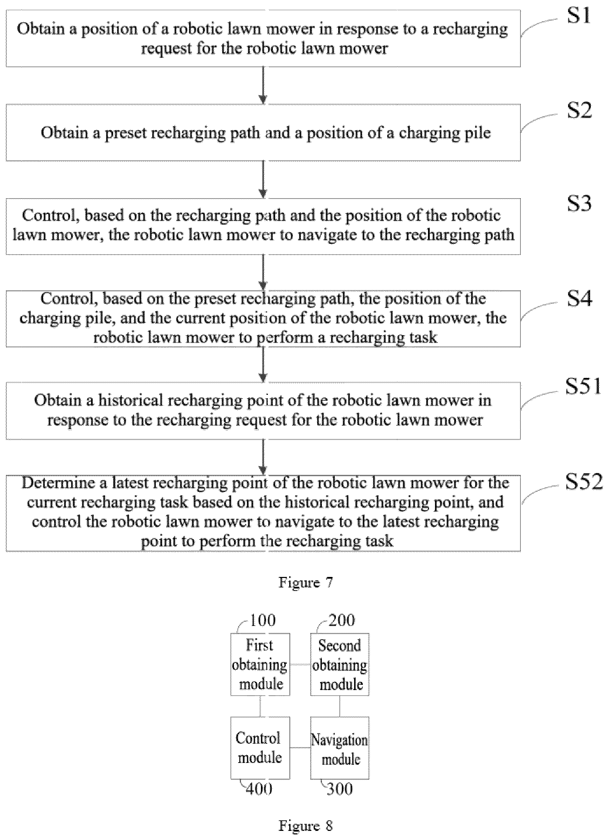

Optionally, as shown in FIG. 7, in some embodiments, after step S4, the method may specifically further include:
S51: obtaining a historical recharging point of the mowing robot in response to the recharging request for the mowing robot; and
S52: determining a newest recharging point of the mowing robot for the current recharging task based on the historical recharging point, and controlling the mowing robot to navigate to the newest recharging point to perform the recharging task.

Specifically, after the previous recharging task is performed, when the next recharging task needs to be performed, the historical recharging point of the mowing robot is obtained in response to the recharging request for the mowing robot; and the newest recharging point of the mowing robot for the current recharging task is determined based on the historical recharging point, so as to control the mowing robot to navigate to the newest recharging point to perform the recharging task.

Optionally, in some embodiments, step S51 may specifically include:
randomly selecting, as the newest recharging point, any point other than the historical recharging point on the recharging path, and controlling the mowing robot to navigate to the newest recharging point to perform the recharging task.

Specifically, after the historical recharging point of the mowing robot is obtained, any point is randomly selected on the recharging path as the newest recharging point for the newest recharging task, where the newest recharging point cannot coincide with the historical recharging point, and the mowing robot is controlled to navigate to the newest recharging point to perform the recharging task.

Optionally, in some embodiments, step S51 may specifically include:
selecting the newest recharging point on the recharging path according to the preset first recharging strategy based on a distance between the historical recharging point and the charging pile, and controlling the mowing robot to navigate to the newest recharging point to perform the recharging task, where the newest recharging point does not coincide with the historical recharging point.

Specifically, after the historical recharging point of the mowing robot is obtained, the distance between the historical recharging point and the charging pile is calculated; and the newest recharging point is selected on the preset recharging path according to the preset first recharging strategy, and the mowing robot is controlled to navigate to the newest recharging point to perform the recharging task, where the newest recharging point cannot coincide with the historical recharging point. In addition, the preset first recharging strategy has been described in detail in the foregoing embodiments, and will not be repeated herein.

Optionally, when there are a plurality of historical recharging points, step S51 may specifically further include:
obtaining recording times of the plurality of historical recharging points, and selecting a historical recharging point with the newest recording time as a second adjustment point; and
selecting the newest recharging point on the recharging path according to a preset second recharging strategy based on a distance between the second adjustment point and the charging pile, and controlling the mowing robot to navigate to the newest recharging point to perform the recharging task, where the newest recharging point does not coincide with any one of the plurality of historical recharging points.

Specifically, when a plurality of (at least two) historical recharging points are obtained, the recording times of the plurality of historical recharging points are first obtained and sorted in an order from the least recent to the most recent; the historical recharging point with the newest recording time is selected as the second adjustment point; the distance between the second adjustment point and the charging pile is calculated; and the newest recharging point is selected on the recharging path according to the preset second recharging strategy, and the mowing robot is controlled to navigate to the newest recharging point to perform the recharging task, where it is necessary to ensure that the newest recharging point cannot coincide with any one of the plurality of historical recharging points.

**In** a specific embodiment, for the preset second recharging strategy, the newest recharging point is selected based on the sorting of the recording times of the plurality of historical recharging points. For example, a point is randomly selected, as the newest recharging point, on the recharging path in the direction away from the historical recharging points of the last three recharging tasks. Alternatively, any point outside a recharging range included by the last three recharging tasks is selected on the recharging path as the newest recharging point.

In this embodiment of the present disclosure, the position of the mowing robot is obtained in response to the recharging request for the mowing robot; next, the preset recharging path and the position of the charging pile are obtained; then, the mowing robot is controlled to navigate to the recharging path based on the recharging path and the position of the mowing robot; and finally, the mowing robot is controlled to perform the recharging task based on the recharging path, the position of the charging pile, and the current position of the mowing robot. In the mowing robot recharging solution according to the present disclosure, the preset recharging path and the position of the charging pile are obtained, and in response to the recharging request, the mowing robot is accurately controlled to navigate to the recharging path to prepare for being recharged on the charging pile; and then, each time the mowing robot is to be recharged on the charging pile, the current recharging point of the mowing robot is quickly adjusted based on the recharging path, the position of the charging pile, and the current position of the mowing robot, so that the mowing robot can avoid previous recharging points as much as possible each time the mowing robot is recharged on the charging pile, and the mowing robot is controlled to quickly perform the recharging task on the charging pile after the mowing robot rotates at the current recharging point to align with the charging pile. This can reduce the situation that the mowing robot frequently rotates at the same position before being recharged on the charging pile, resulting in severe turf wear at the position. It can be learned therefrom that the embodiments of the present disclosure can prevent the lawn from being damaged by the mowing robot while ensuring the efficiency of recharging on the charging pile.

To facilitate better implementation of the mowing robot recharging method in the embodiments of the present disclosure, an embodiment of the present disclosure further provides a mowing robot recharging apparatus based on the above method. The terms have the same meanings as those in the above-mentioned mowing robot recharging method, and for detailed implementation details, reference may be made to the descriptions of the method embodiments.

Referring to FIG. 8, FIG. 8 is a schematic diagram of a structure of a mowing robot recharging apparatus according to an embodiment of the present disclosure. The mowing apparatus may include a first obtaining module 100, a second obtaining module 200, a navigation module 300, and a control module 400, which may be specifically provided as follows.

The first obtaining module 100 is configured to obtain a position of a mowing robot in response to a recharging request for the mowing robot.

Specifically, the first obtaining module 100 first responds to the recharging request for the mowing robot, where the recharging request may be triggered by the mowing robot itself, or by a server, or by a user through hardware or software. For example, the mowing robot regularly detects the remaining power, and starts to automatically return for charging when the mowing robot detects that the power level has decreased to a critical value (for example, the power level of 15%). Alternatively, a timed recharging task is set for the mowing robot, and the recharging request is triggered after the completion of each mowing task or within a preset period of time. Alternatively, an application on a mobile phone may be used to prompt the user that the current mowing robot is running out of power, which requires the user to input a recharging task for the mowing robot through the application on the mobile phone, and the mobile phone generates the recharging request for the mowing robot based on information about the recharging task. Still alternatively, the user can press a physical recharging button on the mowing robot to generate the recharging request for the mowing robot, and the mowing robot performs the recharging task. In response to the recharging request for the mowing robot, the position of the mowing robot is obtained in real time.

The second obtaining module 200 is configured to obtain a preset recharging path and a position of a charging pile.

Specifically, for the second obtaining module 200, before the recharging task on the charging pile is performed, the center line of the charging pile also needs to be preset as the recharging path of the mowing robot based on the position and location of the charging pile, mainly based on the position of the infrared emitter on the charging pile and the orientation of the charging pile. The recharging path further includes a recharging direction; and in response to the recharging request for the mowing robot, the mowing robot can obtain the preset recharging path and the position of the charging pile locally.

The navigation module 300 is configured to control, based on the recharging path and the position of the mowing robot, the mowing robot to navigate to the recharging path.

Specifically, after the mowing robot obtains the preset recharging path and the position of the charging pile, the navigation module 300 accurately controls, based on the recharging path and the position information of the mowing robot, the mowing robot to navigate to the recharging path. For example, the server can control the mowing robot to travel based on the preset recharging path and the position of the charging pile, so that the mowing robot navigates to the recharging path. The intelligent terminal can control the mowing robot to travel based on the recharging path and the position of the mowing robot, so that the mowing robot navigates to the recharging path.

Optionally, in some embodiments, the navigation module 300 may be specifically further configured to: obtain the position of the mowing robot; generate a first recharging route based on the recharging path and the position of the mowing robot; and adjust the position of the mowing robot, and control the mowing robot to navigate to the recharging path according to the first recharging route.

The control module 400 is configured to control, based on the recharging path, the position of the charging pile, and the current position of the mowing robot, the mowing robot to perform a recharging task.

Specifically, after the mowing robot arrives at a point on the recharging path, the control module 400 quickly adjusts the current recharging point of the mowing robot based on the recharging path, the position of the charging pile, and the current position of the mowing robot, so that the mowing robot can avoid previous recharging points as much as possible when the mowing robot is recharged on the charging pile this time, and the mowing robot is controlled to quickly perform the recharging task on the charging pile after the mowing robot rotates at the current recharging point to align with the charging pile. This can reduce the situation that the mowing robot frequently rotates at the same position before being recharged on the charging pile, resulting in severe turf wear at the position.

Optionally, in some embodiments, the control module 400 may specifically further include:
an adjustment point unit configured to control, based on the position of the mowing robot, the mowing robot to navigate to a first adjustment point on the preset recharging path;
a first recharging point unit configured to randomly select, as a first recharging point, any point other than the first adjustment point on the preset recharging path, and control the mowing robot to navigate to the first recharging point to perform the recharging task; and
a second recharging point unit configured to: obtain a distance between the first adjustment point and the position of the charging pile; and select a second recharging point on the recharging path according to a preset first recharging strategy based on the distance between the first adjustment point and the position of the charging pile, and control the mowing robot to navigate to the second recharging point to perform the recharging task.

Optionally, in some embodiments, the mowing robot recharging apparatus may specifically further include:
a historical recharging point module configured to obtain a historical recharging point of the mowing robot in response to the recharging request for the mowing robot; and
a newest recharging point module configured to determine a newest recharging point of the mowing robot for the current recharging task based on the historical recharging point, and control the mowing robot to navigate to the newest recharging point to perform the recharging task.

Optionally, in some embodiments, the newest recharging point module may specifically further include:
a first newest recharging point unit configured to randomly select, as the newest recharging point, any point other than the historical recharging point on the recharging path, and control the mowing robot to navigate to the newest recharging point to perform the recharging task;
a second newest recharging point unit configured to select the newest recharging point on the recharging path according to the preset first recharging strategy based on a distance between the historical recharging point and the charging pile, and control the mowing robot to navigate to the newest recharging point to perform the recharging task, where the newest recharging point does not coincide with the historical recharging point; and
a third newest recharging point unit configured to: obtain recording times of the plurality of historical recharging points, and select a historical recharging point with the newest recording time as a second adjustment point; and select the newest recharging point on the recharging path according to a preset second recharging strategy based on a distance between the second adjustment point and the charging pile, and control the mowing robot to navigate to the newest recharging point to perform the recharging task, where the newest recharging point does not coincide with any one of the plurality of historical recharging points.

In this embodiment of the present disclosure, the first obtaining module 100 obtains the position of the mowing robot in response to the recharging request for the mowing robot; next, the second obtaining module 200 obtains the preset recharging path and the position of the charging pile; then, the navigation module 300 controls, based on the recharging path and the position of the mowing robot, the mowing robot to navigate to the recharging path; and finally, the control module 400 controls, based on the recharging path, the position of the charging pile, and the current position of the mowing robot, the mowing robot to perform the recharging task. In the mowing robot recharging solution according to the present disclosure, the preset recharging path and the position of the charging pile are obtained, and in response to the recharging request, the mowing robot is accurately controlled to navigate to the recharging path to prepare for being recharged on the charging pile; and then, each time the mowing robot is to be recharged on the charging pile, the current recharging point of the mowing robot is quickly adjusted based on the recharging path, the position of the charging pile, and the current position of the mowing robot, so that the mowing robot can avoid previous recharging point as much as possible each time the mowing robot is recharged on the charging pile, and the mowing robot is controlled to quickly perform the recharging task on the charging pile after the mowing robot rotates at the current recharging point to align with the charging pile. This can reduce the situation that the mowing robot frequently rotates at the same position before being recharged on the charging pile, resulting in severe turf wear at the position. It can be learned therefrom that the embodiments of the present disclosure can prevent the lawn from being damaged by the mowing robot while ensuring the efficiency of recharging on the charging pile.

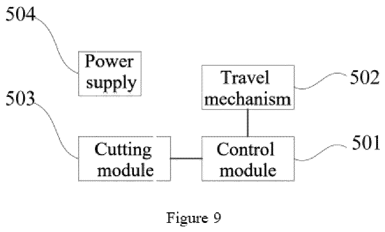

In addition, an embodiment of the present disclosure further provides a mowing robot. As shown in FIG. 9, it is shown a schematic diagram of a structure of the mowing robot according to the embodiment of the present disclosure. Specifically,
the mowing robot may include components such as a control module 501, a travel mechanism 502, a cutting module 503, and a power supply 504. Those skilled in the art will appreciate that the configuration of the electronic device shown in FIG. 6 does not impose a limitation on the electronic device, and may include more or fewer components than those shown, a combination of some components or a different arrangement of components.

The control module 501 is a control center of the mowing robot, the control module 501 may specifically include components such as a central process unit (CPU), a memory, an input/output port, a system bus, a timer/counter, a digital-to-analog converter and an analog-to-digital converter. The CPU performs various functions of the mowing robot and processes data by running or executing software programs and/or modules stored in the memory and calling the data stored in the memory. Preferably, the CPU can integrate an application processor and a modem processor, where the application processor mainly processes operating systems and applications, etc., and the modem processor mainly processes wireless communications. It may be understood that the above-mentioned modem processor may also not be integrated into the CPU.

The memory may be used to store software programs and modules, and the CPU executes various functional applications and processes data by running the software programs and modules stored in the memory. The memory may mainly include a program storage area and a data storage area, where the program storage area can store an operating system, an application required by at least one function (such as a sound play function, image play function, etc.); the data storage area can store data created during the use of the electronic device, or the like. In addition, the memory may include a high-speed random access memory, and may also include a non-volatile memory, such as at least one disk storage device and a flash memory device, or other volatile solid-state storage devices. Accordingly, the memory may also include a memory controller to provide an access by the CPU to the memory.

The travel mechanism 502 is electrically connected to the control module 501 for adjusting the travel speed and direction of the mowing robot in response to control signals transmitted by the control module 501 to implement the self-moving function of the mowing robot.

The cutting module 503 is electrically connected to the control module 501 and is configured to adjust the height and speed of the cutter disc in response to the control signals transmitted by the control module to carry out the mowing operation.

The power source 504 may be logically connected to the control module 501 by means of a power management system, so as to implement the functions, such as charging management, discharging management and power consumption management, by means of the power management system. The power source 504 may also include any of more than one DC or AC power source, a recharging system, a power failure detection circuit, a power converter or an inverter, and a power status indicator, etc.

Although not shown, the mowing robot may also include a communication module, a sensor module, a prompt module, etc., which will not be repeated here.

The communication module is configured to transmit and receive signals during transmitting and receiving information, and to enable signal transmitting and receiving between a user device and a base station or a server by means of establishing a communication connection with the user device, the base station or the server.

The sensor module is configured to collect internal or external environmental information, and to feed the collected environmental data back to the control module for making a decision, thereby achieving the functions of precise positioning and intelligent obstacle avoidance of the mowing robot. The sensor includes an infrared sensor. Optionally, the sensor may include: an ultrasonic sensor, a collision sensor, a rain sensor, a Lidar sensor, an inertial measurement unit, a wheel speedometer, an image sensor, a position sensor, and other sensors, which are not limited herein.

The prompt module is configured to indicate the current operating status of the mowing robot to the user. In this solution, the prompt module includes, but is not limited to, an indicator light, a buzzer, etc. For example, the mowing robot can indicate to the user the current status of the power source, the operating status of an electric motor, the operating status of the sensor, etc. by means of the indicator light. For another example, if a malfunction or theft of the mowing robot is detected, an alert can be provided by the buzzer.

Particularly, in this embodiment, the processor of the control module 501 may load executable files corresponding to the processes of one or more applications into the memory and run the applications stored in the memory according to the following instructions, so as to achieve the following functions:
obtaining a position of a mowing robot in response to a recharging request for the mowing robot; obtaining a preset recharging path and a position of a charging pile; controlling, based on the recharging path and the position of the mowing robot, the mowing robot to navigate to the recharging path; and controlling, based on the recharging path, the position of the charging pile, and the current position of the mowing robot, the mowing robot to perform a recharging task.

For the specific implementation of the above operations, reference may be made to the foregoing embodiments, which will not be repeated herein.

In this embodiment of the present disclosure, the position of the mowing robot is obtained in response to the recharging request for the mowing robot; next, the preset recharging path and the position of the charging pile are obtained; then, the mowing robot is controlled to navigate to the recharging path based on the recharging path and the position of the mowing robot; and finally, the mowing robot is controlled to perform the recharging task based on the recharging path, the position of the charging pile, and the current position of the mowing robot. In the mowing robot recharging solution according to the present disclosure, the preset recharging path and the position of the charging pile are obtained, and in response to the recharging request, the mowing robot is accurately controlled to navigate to the recharging path to prepare for being recharged on the charging pile; and then, each time the mowing robot is to be recharged on the charging pile, the current recharging point of the mowing robot is quickly adjusted based on the preset recharging path, the position of the charging pile, and the current position of the mowing robot, so that the mowing robot can avoid previous recharging point as much as possible each time the mowing robot is recharged on the charging pile, and the mowing robot is controlled to quickly perform the recharging task on the charging pile after the mowing robot rotates at the current recharging point to align with the charging pile. This can reduce the situation that the mowing robot frequently rotates at the same position before being recharged on the charging pile, resulting in severe turf wear at the position. It can be learned therefrom that the embodiments of the present disclosure can prevent the lawn from being damaged by the mowing robot while ensuring the efficiency of recharging on the charging pile.

Those of ordinary skill in the art will appreciate that all or some of the steps of the various methods of the foregoing embodiments may be completed by the instructions or by the instructions controlling relevant hardware. The instructions may be stored in a computer-readable storage medium and loaded and executed by the processor.

To this end, an embodiment of the present disclosure provides a storage medium storing a plurality of instructions that can be loaded by a processor to perform the steps in any one of the mowing robot recharging methods according to the embodiments of the present disclosure. For example, the instructions can be used to perform the following steps:
obtaining a position of a mowing robot in response to a recharging request for the mowing robot; obtaining a preset recharging path and a position of a charging pile; controlling, based on the recharging path and the position of the mowing robot, the mowing robot to navigate to the recharging path; and controlling, based on the recharging path, the position of the charging pile, and the current position of the mowing robot, the mowing robot to perform a recharging task.

For the specific implementation of the above operations, reference may be made to the foregoing embodiments, which will not be repeated herein.

The storage medium may include: a read-only memory (ROM), a random access memory (RAM), a magnetic disk, an optical disc, etc.

Because the instructions stored in the storage medium can be used to perform the steps in any one of the mowing robot recharging methods according to the embodiments of the present disclosure, the beneficial effects that can be achieved by any one of the mowing robot recharging methods according to the embodiments of the present disclosure can be achieved. For details, reference may be made to the foregoing embodiments, which will not be repeated herein.

The mowing robot recharging method, the mowing robot, and the storage medium according to the embodiments of the present disclosure have been described in detail above, and the principles and implementations of the present disclosure are set forth by way of specific examples herein. The descriptions of the foregoing embodiments are merely intended to facilitate understanding of the method according to the present disclosure and the core idea thereof. In conclusion, the contents of this specification should not be construed as a limitation to the present disclosure.

## Claims

1. A mowing robot recharging method, comprising at least the following steps:
obtaining a position of a mowing robot in response to a recharging request for the mowing robot (S1);
obtaining a preset recharging path and a position of a charging pile (S2),
controlling the mowing robot to navigate to the recharging path based on the recharging path and the position of the mowing robot (S3); and
controlling the mowing robot to perform a recharging task based on the recharging path, the position of the charging pile, and the current position of the mowing robot (S4),
**characterised in that** the recharging path is preset based on a direction to the charging pile and positions of infrared emitters which are provided on the charging pile,
and **in that** the step of controlling the mowing robot to perform a recharging task includes:
adjusting a current recharging point of the mowing robot to avoid a previous recharging point,
wherein a recharging point is a point where the mowing robot rotates to adjust an orientation of the mowing robot, and
after the mowing robot rotates at the current recharging point to align with the charging pile, controlling the mowing robot to perform the recharging task on the charging pile.

2. The recharging method according to claim 1, wherein the controlling the mowing robot to perform the recharging task based on the recharging path, the position of the charging pile, and the current position of the mowing robot comprises:
controlling the mowing robot to navigate to a first adjustment point on the recharging path based on the current position of the mowing robot; and
randomly selecting any point other than the first adjustment point on the recharging path as a first recharging point, and controlling the mowing robot to navigate to the first recharging point to perform the recharging task.

3. The recharging method according to claim 1, wherein the controlling the mowing robot to perform a recharging task based on the recharging path, the position of the charging pile, and the current position of the mowing robot comprises:
controlling the mowing robot to navigate to a first adjustment point on the recharging path based on the current position of the mowing robot;
obtaining a distance between the first adjustment point and the position of the charging pile; and
selecting a second recharging point on the recharging path according to a preset first recharging strategy based on the distance between the first adjustment point and the position of the charging pile, and controlling the mowing robot to navigate to the second recharging point to perform the recharging task.

4. The recharging method according to claim 3, wherein the selecting the second recharging point on the recharging path according to the preset first recharging strategy based on the distance between the first adjustment point and the position of the charging pile, and controlling the mowing robot to navigate to the second recharging point to perform the recharging task comprises:
when the distance between the first adjustment point and the position of the charging pile is less than or equal to a preset first threshold, selecting any point between a start point of the recharging path and the first adjustment point as the second recharging point; or
when the distance between the first adjustment point and the position of the charging pile is greater than a preset first threshold, selecting any point between an end point of the recharging path and the first adjustment point as the second recharging point; and
controlling the mowing robot to navigate to the second recharging point to perform the recharging task.

5. The recharging method according to claim 1, wherein after the controlling the mowing robot to perform a recharging task, the method further comprises:
obtaining a historical recharging point of the mowing robot in response to the recharging request for the mowing robot; and
determining a newest recharging point of the mowing robot for the current recharging task based on the historical recharging point, and controlling the mowing robot to navigate to the newest recharging point to perform the recharging task.

6. The recharging method according to claim 5, wherein the determining a newest recharging point of the mowing robot for the current recharging task based on the historical recharging point, and controlling the mowing robot to navigate to the newest recharging point to perform the recharging task comprises:
randomly selecting any point other than the historical recharging point on the recharging path as the newest recharging point , and controlling the mowing robot to navigate to the newest recharging point to perform the recharging task.

7. The recharging method according to claim 5, wherein the determining a newest recharging point of the mowing robot for the current recharging task based on the historical recharging point, and controlling the mowing robot to navigate to the newest recharging point to perform the recharging task comprises:
selecting the newest recharging point on the recharging path according to the preset first recharging strategy based on a distance between the historical recharging point and the charging pile, and controlling the mowing robot to navigate to the newest recharging point to perform the recharging task, wherein the newest recharging point does not coincide with the historical recharging point.

8. The mowing robot recharging method according to any one of claims 1 to 5, wherein when there are a plurality of historical recharging points, the determining a newest recharging point of the mowing robot for the current recharging task based on the historical recharging point, and controlling the mowing robot to navigate to the newest recharging point to perform the recharging task comprises:
obtaining recording times of the plurality of historical recharging points, and selecting a historical recharging point with a newest recording time as a second adjustment point; and
selecting the newest recharging point on the recharging path according to a preset second recharging strategy based on a distance between the second adjustment point and the charging pile, and controlling the mowing robot to navigate to the newest recharging point to perform the recharging task, wherein the newest recharging point does not coincide with any one of the plurality of historical recharging points.

9. A mowing robot, comprising a memory, a processor, and a computer program stored on the memory and capable of running on the processor, wherein when executing the program, the processor implements the steps of the mowing robot recharging method according to any one of claims 1 to 8.

10. A storage medium having stored thereon a computer program, wherein when the computer program is executed by a processor, the steps of the mowing robot recharging method according to any one of claims 1 to 8 are implemented.

## Patentansprüche

1. Verfahren zum Wiederaufladen eines Mähroboters, umfassend zumindest die folgenden Schritte:
Erhalten einer Position eines Mähroboters als Reaktion auf eine Wiederaufladeanforderung für den Mähroboter (S1);
Erhalten eines voreingestellten Wiederaufladeweges und einer Position eines Wiederaufladestapels (S2),
Steuern des Mähroboters, um zu dem Wiederaufladeweg basierend auf dem Wiederaufladeweg und der Position des Mähroboters zu navigieren (S3); und
Steuern des Mähroboters, um eine Wiederaufladeaufgabe basierend auf dem Wiederaufladeweg, der Position des Wiederaufladestapels und der aktuellen Position des Mähroboters durchzuführen (S4),
**dadurch gekennzeichnet, dass** der Wiederaufladeweg basierend auf einer Richtung zu dem Wiederaufladestapel und Positionen von Infrarotstrahlern, die auf dem Wiederaufladestapel bereitgestellt sind, voreingestellt ist,
und dass der Schritt des Steuerns des Mähroboters, um eine Wiederaufladeaufgabe durchzuführen, Folgendes beinhaltet:
Anpassen eines aktuellen Wiederaufladepunktes des Mähroboters, um einen vorherigen Wiederaufladepunkt zu vermeiden, wobei ein Wiederaufladepunkt ein Punkt ist, an dem sich der Mähroboter dreht, um eine Orientierung des Mähroboters anzupassen, und
nachdem sich der Mähroboter an dem aktuellen Wiederaufladepunkt dreht, um mit dem Wiederaufladestapel ausgerichtet zu werden, Steuern des Mähroboters, um die Wiederaufladeaufgabe an dem Wiederaufladestapel durchzuführen.

2. Verfahren zum Wiederaufladen nach Anspruch 1, wobei das Steuern des Mähroboters, um die Wiederaufladeaufgabe basierend auf dem Wiederaufladeweg, der Position des Wiederaufladestapels und der aktuellen Position des Mähroboters durchzuführen, Folgendes umfasst:
Steuern des Mähroboters, um zu einem ersten Anpassungspunkt auf dem Wiederaufladeweg basierend auf der aktuellen Position des Mähroboters zu navigieren; und
zufälliges Auswählen eines beliebigen anderen Punktes als dem ersten Anpassungspunkt auf dem Wiederaufladeweg als einen ersten Wiederaufladepunkt und Steuern des Mähroboters, um zu dem ersten Wiederaufladepunkt zu navigieren, um die Wiederaufladeaufgabe durchzuführen.

3. Verfahren zum Wiederaufladen nach Anspruch 1, wobei das Steuern des Mähroboters, um eine Wiederaufladeaufgabe basierend auf dem Wiederaufladeweg, der Position des Wiederaufladestapels und der aktuellen Position des Mähroboters durchzuführen, Folgendes umfasst:
Steuern des Mähroboters, um zu einem ersten Anpassungspunkt auf dem Wiederaufladeweg basierend auf der aktuellen Position des Mähroboters zu navigieren;
Erhalten eines Abstands zwischen dem ersten Anpassungspunkt und der Position des Wiederaufladestapels; und
Auswählen eines zweiten Wiederaufladepunktes auf dem Wiederaufladeweg gemäß einer voreingestellten ersten Wiederaufladestrategie basierend auf dem Abstand zwischen dem ersten Anpassungspunkt und der Position des Wiederaufladestapels und Steuern des Mähroboters, um zu dem zweiten Wiederaufladepunkt zu navigieren, um die Wiederaufladeaufgabe durchzuführen.

4. Verfahren zum Wiederaufladen nach Anspruch 3, wobei das Auswählen des zweiten Wiederaufladepunktes auf dem Wiederaufladeweg gemäß der voreingestellten ersten Wiederaufladestrategie basierend auf dem Abstand zwischen dem ersten Anpassungspunkt und der Position des Wiederaufladestapels und das Steuern des Mähroboters, um zu dem zweiten Wiederaufladepunkt zu navigieren, um die Wiederaufladeaufgabe durchzuführen, Folgendes umfasst:
wenn der Abstand zwischen dem ersten Anpassungspunkt und der Position des Wiederaufladestapels weniger als ein oder gleich einem voreingestellten ersten Schwellenwert ist, Auswählen eines beliebigen Punktes zwischen einem Startpunkt des Wiederaufladeweges und dem ersten Anpassungspunkt als den zweiten Wiederaufladepunkt; oder
wenn der Abstand zwischen dem ersten Anpassungspunkt und der Position des Wiederaufladestapels größer als ein voreingestellter erster Schwellenwert ist, Auswählen eines beliebigen Punktes zwischen einem Endpunkt des Wiederaufladeweges und dem ersten Anpassungspunkt als den zweiten Wiederaufladepunkt; und
Steuern des Mähroboters, um zu dem zweiten Wiederaufladepunkt zu navigieren, um die Wiederaufladeaufgabe durchzuführen.

5. Verfahren zum Wiederaufladen nach Anspruch 1, wobei nach dem Steuern des Mähroboters, um eine Wiederaufladeaufgabe durchzuführen, das Verfahren ferner Folgendes umfasst:
Erhalten eines historischen Wiederaufladepunktes des Mähroboters als Reaktion auf die Wiederaufladeanforderung für den Mähroboter; und
Bestimmen eines neuesten Wiederaufladepunktes des Mähroboters für die aktuelle Wiederaufladeaufgabe basierend auf dem historischen Wiederaufladepunkt und Steuern des Mähroboters, um zu dem neuesten Wiederaufladepunkt zu navigieren, um die Wiederaufladeaufgabe durchzuführen.

6. Verfahren zum Wiederaufladen nach Anspruch 5, wobei das Bestimmen eines neuesten Wiederaufladepunktes des Mähroboters für die aktuelle Wiederaufladeaufgabe basierend auf dem historischen Wiederaufladepunkt und das Steuern des Mähroboters, um zu dem neuesten Wiederaufladepunkt zu navigieren, um die Wiederaufladeaufgabe durchzuführen, Folgendes umfasst:
zufälliges Auswählen eines beliebigen anderen Punktes als dem historischen Wiederaufladepunkt auf dem Wiederaufladeweg als den neuesten Wiederaufladepunkt und Steuern des Mähroboters, um zu dem neuesten Wiederaufladepunkt zu navigieren, um die Wiederaufladeaufgabe durchzuführen.

7. Verfahren zum Wiederaufladen nach Anspruch 5, wobei das Bestimmen eines neuesten Wiederaufladepunktes des Mähroboters für die aktuelle Wiederaufladeaufgabe basierend auf dem historischen Wiederaufladepunkt und das Steuern des Mähroboters, um zu dem neuesten Wiederaufladepunkt zu navigieren, um die Wiederaufladeaufgabe durchzuführen, Folgendes umfasst:
Auswählen des neuesten Wiederaufladepunktes auf dem Wiederaufladeweg gemäß der voreingestellten ersten Wiederaufladestrategie basierend auf einem Abstand zwischen dem historischen Wiederaufladepunkt und dem Wiederaufladestapel und Steuern des Mähroboters, um zu dem neuesten Wiederaufladepunkt zu navigieren, um die Wiederaufladeaufgabe durchzuführen, wobei der neueste Wiederaufladepunkt nicht mit dem historischen Wiederaufladepunkt übereinstimmt.

8. Verfahren zum Wiederaufladen eines Mähroboters nach einem der Ansprüche 1 bis 5, wobei, wenn es eine Vielzahl von historischen Wiederaufladepunkten gibt, das Bestimmen eines neuesten Wiederaufladepunktes des Mähroboters für die aktuelle Wiederaufladeaufgabe basierend auf dem historischen Wiederaufladepunkt und das Steuern des Mähroboters, um zu dem neuesten Wiederaufladepunkt zu navigieren, um die Wiederaufladeaufgabe durchzuführen, Folgendes umfasst:
Erhalten von Aufzeichnungszeiten der Vielzahl von historischen Wiederaufladepunkten und Auswählen eines historischen Wiederaufladepunktes mit einer neuesten Aufzeichnungszeit als einen zweiten Anpassungspunkt; und
Auswählen des neuesten Wiederaufladepunktes auf dem Wiederaufladeweg gemäß einer voreingestellten zweiten Wiederaufladestrategie basierend auf einem Abstand zwischen dem zweiten Anpassungspunkt und dem Wiederaufladestapel und Steuern des Mähroboters, um zu dem neuesten Wiederaufladepunkt zu navigieren, um die Wiederaufladeaufgabe durchzuführen, wobei der neueste Wiederaufladepunkt nicht mit einem beliebigen aus der Vielzahl von historischen Wiederaufladepunkten übereinstimmt.

9. Mähroboter, umfassend einen Speicher, einen Prozessor und ein Computerprogramm, das auf dem Speicher gespeichert und in der Lage ist, auf dem Prozessor zu laufen, wobei, wenn das Programm ausgeführt wird, der Prozessor die Schritte des Verfahrens zum Wiederaufladen eines Mähroboters nach einem der Ansprüche 1 bis 8 implementiert.

10. Speichermedium, auf dem ein Computerprogramm gespeichert ist, wobei, wenn das Computerprogramm durch einen Prozessor ausgeführt wird, die Schritte des Verfahrens zum Wiederaufladen eines Mähroboters nach einem der Ansprüche 1 bis 8 implementiert werden.

## Revendications

1. Procédé de recharge de robot de tonte, comprenant au moins les étapes suivantes :
l'obtention d'une position d'un robot de tonte en réponse à une demande de recharge pour le robot de tonte (S1) ;
l'obtention d'un trajet de recharge prédéfini et d'une position d'une pile de charge (S2),
la commande au robot de tonte de naviguer sur le trajet de recharge sur la base du trajet de recharge et de la position du robot de tonte (S3) ; et
la commande au robot de tonte d'effectuer une tâche de recharge sur la base du trajet de recharge, de la position de la pile de charge et de la position actuelle du robot de tonte (S4),
**caractérisé en ce que** le trajet de recharge est prédéfini sur la base d'une direction vers la pile de charge et des positions d'émetteurs infrarouges qui sont prévus sur la pile de charge,
et **en ce que** l'étape de commande au robot de tonte d'effectuer une tâche de recharge comprend :
l'ajustement d'un point de recharge actuel du robot de tonte pour éviter un point de recharge précédent, dans lequel un point de recharge est un point où le robot de tonte tourne pour ajuster une orientation du robot de tonte, et
après que le robot de tonte a tourné au point de recharge actuel pour s'aligner avec la pile de charge, la commande au robot de tonte d'effectuer la tâche de recharge sur la pile de charge.

2. Procédé de recharge selon la revendication 1, dans lequel la commande au robot de tonte d'effectuer la tâche de recharge sur la base du trajet de recharge, de la position de la pile de charge et de la position actuelle du robot de tonte comprend :
la commande au robot de tonte de naviguer jusqu'à un premier point d'ajustement sur le trajet de recharge sur la base de la position actuelle du robot de tonte ; et
la sélection aléatoire d'un point quelconque autre que le premier point d'ajustement sur le trajet de recharge en tant que premier point de recharge, et la commande au robot de tonte de naviguer jusqu'au premier point de recharge pour effectuer la tâche de recharge.

3. Procédé de recharge selon la revendication 1, dans lequel la commande au robot de tonte d'effectuer une tâche de recharge sur la base du trajet de recharge, de la position de la pile de charge et de la position actuelle du robot de tonte comprend :
la commande au robot de tonte de naviguer jusqu'à un premier point d'ajustement sur le trajet de recharge sur la base de la position actuelle du robot de tonte ; et
l'obtention d'une distance entre le premier point d'ajustement et la position de la pile de charge ; et
la sélection d'un deuxième point de recharge sur le trajet de recharge en fonction d'une première stratégie de recharge prédéfinie sur la base de la distance entre le premier point d'ajustement et la position de la pile de charge, et la commande au robot de tonte de naviguer jusqu'au deuxième point de recharge pour effectuer la tâche de recharge.

4. Procédé de recharge selon la revendication 3, dans lequel la sélection du deuxième point de recharge sur le trajet de recharge en fonction de la première stratégie de recharge prédéfinie sur la base de la distance entre le premier point d'ajustement et la position de la pile de charge, et la commande au robot de tonte de naviguer jusqu'au deuxième point de recharge pour effectuer la tâche de recharge comprennent :
lorsque la distance entre le premier point d'ajustement et la position de la pile de charge est inférieure ou égale à un premier seuil prédéfini, la sélection d'un point quelconque entre un point de départ du trajet de recharge et le premier point d'ajustement en tant que deuxième point de recharge ; ou
lorsque la distance entre le premier point d'ajustement et la position de la pile de charge est supérieure à un premier seuil prédéfini, la sélection d'un point quelconque entre un point d'arrivée du trajet de recharge et le premier point d'ajustement en tant que deuxième point de recharge ; et
la commande au robot de tonte de naviguer jusqu'au deuxième point de recharge pour effectuer la tâche de recharge.

5. Procédé de recharge selon la revendication 1, dans lequel, après la commande au robot de tonte d'effectuer une tâche de recharge, le procédé comprend en outre :
l'obtention d'un point de recharge historique du robot de tonte en réponse à la demande de recharge pour le robot de tonte ; et
la détermination d'un point de recharge le plus récent du robot de tonte pour la tâche de recharge actuelle sur la base du point de recharge historique, et la commande au robot de tonte de naviguer jusqu'au point de recharge le plus récent pour effectuer la tâche de recharge.

6. Procédé de recharge selon la revendication 5, dans lequel la détermination d'un point de recharge le plus récent du robot de tonte pour la tâche de recharge actuelle sur la base du point de recharge historique, et la commande au robot de tonte de naviguer jusqu'au point de recharge le plus récent pour effectuer la tâche de recharge comprennent :
la sélection aléatoire d'un point quelconque autre que le point de recharge historique sur le trajet de recharge en tant que point de recharge le plus récent, et la commande au robot de tonte de naviguer jusqu'au point de recharge le plus récent pour effectuer la tâche de recharge.

7. Procédé de recharge selon la revendication 5, dans lequel la détermination d'un point de recharge le plus récent du robot de tonte pour la tâche de recharge actuelle sur la base du point de recharge historique, et la commande au robot de tonte de naviguer jusqu'au point de recharge le plus récent pour effectuer la tâche de recharge comprend :
la sélection du point de recharge le plus récent sur le trajet de recharge en fonction de la première stratégie de recharge prédéfinie sur la base d'une distance entre le point de recharge historique et la pile de charge, et la commande au robot de tonte de naviguer jusqu'au point de recharge le plus récent pour effectuer la tâche de recharge, dans lequel le point de recharge le plus récent ne coïncide pas avec le point de recharge historique.

8. Procédé de recharge de robot de tonte selon l'une quelconque des revendications 1 à 5, dans lequel, lorsqu'il existe une pluralité de points de recharge historiques, la détermination d'un point de recharge le plus récent du robot de tonte pour la tâche de recharge actuelle sur la base du point de recharge historique, et la commande au robot de tonte de naviguer jusqu'au point de recharge le plus récent pour effectuer la tâche de recharge comprennent :
l'obtention des temps d'enregistrement de la pluralité de points de recharge historiques, et la sélection d'un point de recharge historique avec un temps d'enregistrement le plus récent en tant que deuxième point d'ajustement ; et
la sélection du point de recharge le plus récent sur le trajet de recharge en fonction d'une deuxième stratégie de recharge prédéfinie sur la base d'une distance entre le deuxième point d'ajustement et la pile de charge, et la commande au robot de tonte de naviguer jusqu'au point de recharge le plus récent pour effectuer la tâche de recharge, dans lequel le point de recharge le plus récent ne coïncide avec aucun de la pluralité de points de recharge historiques.

9. Robot de tonte, comprenant une mémoire, un processeur et un programme informatique stocké dans la mémoire et apte à fonctionner sur le processeur, dans lequel lors de l'exécution du programme, le processeur met en œuvre les étapes du procédé de recharge de robot de tonte selon l'une quelconque des revendications 1 à 8.

10. Support de stockage sur lequel est stocké un programme informatique, dans lequel lorsque le programme informatique est exécuté par un processeur, les étapes du procédé de recharge de robot de tonte selon l'une quelconque des revendications 1 à 8 sont mises en œuvre.
